# EUROPÄISCHE PATENTSCHRIFT

(11) **EP 2 892 759 B1**
(45) Veröffentlichungstag und Bekanntmachung des Hinweises auf die Patenterteilung: **22.04.2020**
(21) Anmeldenummer: 13765972.8
(22) Anmeldetag: 03.09.2013
(51) Int. Cl.: B60Q 1/14, B60Q 1/08, F21S 41/141, F21S 41/25, F21S 41/663, F21S 41/60

(54) **SCHEINWERFER FÜR FAHRZEUGE**
HEADLIGHT FOR VEHICLES
PHARE POUR VÉHICULES

(30) Priorität: 07.09.2012 DE 102012108309
(43) Veröffentlichungstag der Anmeldung: 15.07.2015
(73) Patentinhaber: HELLA GmbH & Co. KGaA, 59552 Lippstadt (DE)
(72) Erfinder: KLIEBISCH, Dirk, 33102 Paderborn (DE)
(86) Internationale Anmeldenummer: PCT/EP2013/068131
(87) Internationale Veröffentlichungsnummer: WO 2014/037320

(56) Entgegenhaltungen:
- EP-A2- 2 280 215
- DE-A1-102005 041 234
- DE-A1-102009 020 619
- US-A1- 2011 235 349

## Beschreibung

Die Erfindung betrifft einen Scheinwerfer nach dem Oberbegriff des Patentanspruchs 1.

Aus der DE 10 2005 041 234 A1 ist ein Scheinwerfer für Fahrzeuge bekannt, bei dem eine Gesamtlichtverteilung durch Überlagerung von Teillichtverteilungen gebildet ist. Die Teillichtverteilungen werden jeweils durch mehrere Optikeinheiten unterschiedlicher Abbildungscharakteristik gebildet, denen jeweils eine unterschiedliche Gruppe von LED-Lichtquellen zugeordnet ist. Jede Optikeinheit ist derart ausgebildet, dass von ihr auf einer Messwand Zeilen und/oder Spalten gleich großer Lichtflecken abgebildet werden. Damit eine vorgegebene Lichtverteilung, wie beispielsweise eine asymmetrische Abblendlichtverteilung, generiert werden kann, sind die von einer zweiten Optikeinheit abgebildeten Lichtflecken kleiner als die von der ersten Optikeinheit abgebildeten Lichtflecken. Soll als Gesamtlichtverteilung eine Fernlichtverteilung generiert werden, bei der die LED-Lichtquellen derart angesteuert werden, dass ein im Fahrzeugvorfeld befindliches Objekt nicht geblendet wird, wird ein das entsprechende Vorfeldsegment ausleuchtende LED-Lichtquelle abgeschaltet. Da die Segmente der Fernlichtverteilung durch Abbildung jeweils einer einzigen LED-Lichtquelle zu einem Lichtflecken erzeugt werden, führt das Ausschalten der LED-Lichtquelle, die dem Segment zugeordnet ist, in dem sich das Verkehrsobjekt befindendet zu einem großen Beleuchtungsstärkegradient zwischen dem entblendeten Segment und dem ausgeleuchteten Segment. Auch können dynamische Lichtverteilungen, wie beispielsweise die Verschiebung des Lichtschwerpunktes, nur eingeschränkt genutzt werden.

Aus der EP 2 280 215 ist ein Scheinwerfer für Fahrzeuge mit mehreren Gruppen von LED-Lichtquellen bekannt, der über mehrere Optikeinheiten verfügt, so dass Lichtflächen gleicher Breite und unterschiedlicher Höhe abgebildet werden können. Eine Überlagerung von mittels der LED-Lichtquellen abgebildeten Lichtquellen in der Höhe ist nicht vorgesehen.

Aus der DE 10 2009 020 619 ist ein Scheinwerfer für Fahrzeuge mit mehreren Gruppen von LED-Lichtquellen bekannt. Jeder zeilenweise angeordneten Gruppen ist eine Optikeinheit zugeordnet, mittels derer Lichtflecken abbildbar sind, so dass die von den Gruppen der LED-Lichtquellen abgebildeten Lichtflecken zwar die gleiche Breite, jedoch eine unterschiedliche Höhe aufweisen. Hierdurch kann die Anzahl der LED-Lichtquellen reduziert werden.

Aufgabe der vorliegenden Erfindung ist es daher, einen Scheinwerfer für Fahrzeuge derart weiterzubilden, dass eine variablere Anpassung von Lichtverteilungen an das zu beleuchtende Vorfeld, insbesondere im Hinblick von im Vorfeld befindlichen Verkehrsobjekten, gewährleistet ist.

Zur Lösung dieser Aufgabe weist die Erfindung die Merkmale des Patentanspruchs 1 auf.

Nach der Erfindung weist der Scheinwerfer Optikeinheiten auf, die eine solche Abbildungscharakteristik haben, dass alle von diesen abgebildeten Lichtflecken eine in horizontaler Richtung gleiche Breite auf einem im Abstand befindlichen Messschirm aufweisen. In vertikaler Richtung weisen die von verschiedenen Optikelementen abgebildeten Lichtflecken jedoch eine unterschiedliche Höhe auf, so dass Segmente eines Fahrzeugvorfeldes durch Überlagerung von mehreren Lichtflecken beleuchtbar sind. Es erfolgt eine spaltenweise Ausleuchtung von Segmenten des Fahrzeugvorfeldes, wobei durch Zu- bzw. Abschalten von LED-Lichtquellen, deren Licht über die mehreren Optikeinheiten zu demselben Segment des Fahrzeugvorfeldes beleuchtenden Lichtflecken abgebildet wird, eine Variierung der Beleuchtungsstärke ermöglicht wird. Wird eine Entblendung des im Fahrzeugvorfeld befindlichen Verkehrsobjektes dadurch ermöglicht, dass die entsprechenden LED-Lichtquellen ausgeschaltet werden, deren Lichtflecken über die Optikeinheiten auf das Segment abgebildet werden, in dem sich das zu entblendende Verkehrsobjekt befindet, können die zu dem Entblendungssegment benachbarten Segmente des Fahrzeugvorfeldes mit unterschiedlicher Beleuchtungsstärke ausgeleuchtet werden, je nachdem wie viele und/oder welche Optikeinheiten wirksam sind. Der Beleuchtungsgrad des Fahrzeugvorfeldes in der Fernlichtfunktion kann in Gänze somit auch bei Vorliegen eines zu entblendenden Verkehrsobjektes variiert werden. Dies wird im Wesentlichen dadurch realisiert, dass die Optikeinheiten das Licht ausschließlich in Spaltenrichtung unterschiedlich streuen bzw. sammeln. Einfacher gestaltet sich der Aufbau des Scheinwerfers, wenn den Optikeinheiten jeweils eine einzige Zeile von LED-Lichtquellen zugeordnet ist, so dass jede Optikeinheit lediglich eine einzige Zeile von Lichtflecken in horizontaler Richtung abbildet. Durch Überlagerung der entsprechenden Lichtflecken können somit einzelne Segmente des Fahrzeugvorfeldes mit unterschiedlicher Beleuchtungsstärke beaufschlagt werden.

Nach der Erfindung sind zur Erzeugung einer Fernlichtverteilung drei Optikeinheiten vorgesehen, denen jeweils eine Zeile von Lichtquellen zugeordnet ist. Eine Fernlicht-Grundverteilung wird durch die erste Optikeinheit bewirkt, die das von den LED-Lichtquelle erzeugte Licht in vertikaler Richtung streut und quasi zu einer Grundausleuchtung des Fahrzeugvorfeldes dient. Die weiteren Optikeinheiten sind derart ausgebildet, dass das Licht in einen vorderen Bereich des Vorfeldes abgebildet wird. Die hierdurch abgebildeten Lichtflecken weisen eine wesentlich geringere Höhe auf als die Höhe der Lichtflecken der Fernlicht-Grundverteilung.

Nach einer bevorzugten Ausführungsform der Erfindung sind die Optikeinheiten derart ausgebildet, dass sie von der Gruppe von LED-Lichtquellen jeweils Lichtflecken gleicher Höhe abbilden. Jede Optikeinheit bildet somit Lichtflecken gleicher Höhe und gleicher Breite ab, so dass durch Überlagerung von mittels unterschiedlichen Optikeinheiten abgebildeten Lichtflecken Segmente des Fahrzeugvorfeldes mit unterschiedlicher Beleuchtungsstärke beaufschlagt werden können.

Nach einer Weiterbildung der Erfindung sind die LED-Lichtquellen dimmbar ausgebildet, so dass eine weitere Variierung der Beleuchtungsstärke von Segmenten des Fahrzeugvorfeldes gewährleistet ist.

Weitere Vorteile der Erfindung ergeben sich aus den weiteren Unteransprüchen.

Es zeigen:

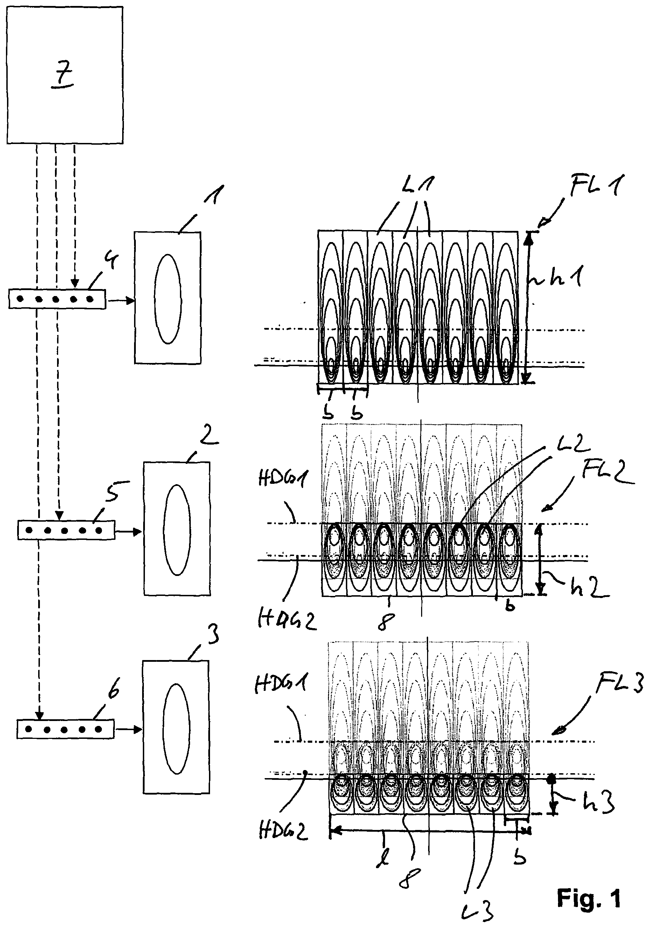

- Fig. 1: eine schematische Darstellung einer Lichteinheit zur Erzeugung einer Fernlichtverteilung mit drei Optikeinheiten, denen jeweils eine Zeile von Lichtquellen zugeordnet ist zur Bildung einer Teillichtverteilung,
- Fig. 2: eine erste Fernlichtverteilung, die durch Abbildung von Lichtflecken mittels einer ersten Optikeinheit erzeugt wird, wobei ein Spaltensegment der Fernlichtverteilung entblendet ist,
- Fig. 3: eine zweite Fernlichtverteilung, die durch Abbildung von Lichtflecken mittels der ersten Optikeinheit und einer zweiten Optikeinheit erzeugt wird, wobei ein Spaltensegment der Fernlichtverteilung entblendet ist,
- Fig. 4: eine dritte Fernlichtverteilung, die durch Abbildung von Lichtflecken mittels der ersten Optikeinheit, der zweiten Optikeinheit und einer dritten Optikeinheit erzeugt wird, wobei ein Spaltensegment der Fernlichtverteilung entblendet ist,
- Fig. 5: eine Fernlichtverteilung, bei der im Unterschied zu Figur 4 alle der dritten Optikeinheit zugeordneten LED-Lichtquelle abgebildet werden zur Anhebung des Beleuchtungsniveaus,
- Fig. 6: eine Ansteuerung lediglich einer der dritten Optikeinheit zugeordneten LED-Lichtquelle zur Erzeugung eines Markierungslichtes zusätzlich zu einer Abblendlichtverteilung,
- Fig. 7: eine Ansteuerung lediglich einer der zweiten Optikeinheiten zugeordneten LED-Lichtquelle zur Erzeugung eines Markierungslichtes zusätzlich zu der Abblendlichtverteilung,
- Fig. 8: eine Ansteuerung lediglich einer der zweiten und dritten Optikeinheit zugeordneten LED-Lichtquelle zur Erzeugung des Markierungslichtes zusätzlich zu einer Abblendlichtverteilung,
- Fig. 9: eine Ansteuerung lediglich einer der zweiten Optikeinheit zugeordneten LED-Lichtquelle zur Erzeugung eines Markierungslichtes zusätzlich zu einer durch die erste Optikeinheit erzeugten Grundfernlichtverteilung,
- Fig. 10: eine Ansteuerung lediglich einer der zweiten und dritten Optikeinheit zugeordneten LED-Lichtquelle zur Erzeugung eines Markierungslichtes zusätzlich zu einer durch die erste Optikeinheit erzeugten Fernlicht-Grundverteilung und
- Fig. 11: eine Ansteuerung lediglich einer der dritten Optikeinheit zugeordneten LED-Lichtquelle zur Erzeugung des Markierungslichtes zusätzlich zu einer durch die erste und zweite Optikeinheit erzeugten Fernlicht-Grundverteilung.

Ein Scheinwerfer für Fahrzeuge weist eine Lichteinheit zur Erzeugung einer Abblendlichtverteilung und eine Lichteinheit zur Erzeugung einer Fernlichtverteilung auf.

Die Fernlichtverteilung weist eine erste Optikeinheit 1, eine zweite Optikeinheit 2 und eine dritte Optikeinheit 3 auf, denen jeweils eine Gruppe von LED-Lichtquellen 4 bzw. LED-Lichtquellen 5 bzw. LED-Lichtquellen 6 zugeordnet sind. Die Gruppen 4, 5, 6 von LED-Lichtquellen sind jeweils zeilenförmig auf einer Leiterplatte angeordnet. Sie erstrecken sich in horizontaler Richtung.

Die Gruppen 4, 5, 6 von LED-Lichtquellen sind durch eine gemeinsame Ansteuereinheit 7 ansteuerbar, wobei nicht nur gesamte Zeilen 4, 5, 6 der LED-Lichtquellen, sondern auch einzelne LED-Lichtquellen der Zeilen 4, 5, 6 ein- und ausschaltbar oder dimmbar sind.

Die LED-Lichtquellen können beispielsweise als LED-Chips ausgebildet sein. Die Gruppen 4, 5, 6 von LED-Lichtquellen können beispielsweise den gleichen Typ von LED-Lichtquellen aufweisen.

Die erste Optikeinheit 1 und die zweite Optikeinheit 2 und die dritte Optikeinheit 3 können beispielsweise aus ein oder mehreren Linsenelementen bestehen.

Die erste Optikeinheit 1 weist eine solche Abbildungscharakteristik auf, dass eine Fernlicht-Grundverteilung FL1 erzeugbar ist, die auf einem beabstandeten Messschirm eine Höhe h1 aufweist. Die Fernlicht-Grundverteilung FL1 besteht aus einer Zeile von Lichtflecken L1, die in vertikaler Richtung gestreut ausgebildet sind. Die einzelnen Lichtflecken L1 weisen die gleiche Höhe h1 sowie eine gleiche Breite b auf.

Die zweite Optikeinheit 2 weist eine solche Abbildungscharakteristik auf, dass eine Fernlichtverteilung FL2 der Höhe h2 erzeugt wird. Sind alle LED-Lichtquellen eingeschaltet, bilden Lichtflecken L2 der Fernlichtverteilung FL2 eine obere Hell-Dunkel-Grenze HDG1. Die einzelnen Lichtflecken L2 weisen die Höhe h2 auf, die kleiner ist als die Höhe h1 der Lichtflecken L1 der Fernlicht-Grundverteilung FL1. Die Lichtflecken L2 der zweiten Fernlichtverteilung FL2 weisen die gleiche Breite b auf wie die Lichtflecken L1 der Fernlichtverteilung FL1.

Die dritte Optikeinheit 3 weist eine solche Abbildungscharakteristik auf, dass das Licht der LED-Lichtquellen 6 zu einer Fernlichtverteilung FL3 einer Höhe h3 abgebildet wird. Eine obere Kante der abgebildeten Lichtflecken L3 bilden eine untere Hell-Dunkel-Grenze HDG2, die in einem Abstand unterhalb der ersten Hell-Dunkel-Grenze HDG1 angeordnet ist. Die Lichtflecken L3 der dritten Fernlichtverteilung FL3 weisen somit eine geringere Höhe h3 auf als die Höhen h1, h2 der Lichtflecken L1 bzw. L2. Die Lichtflecken L3 weisen die gleiche Breite b wie die Lichtflecken L1 bzw. L2 auf.

Die Fernlichtverteilungen FL1, FL2 und FL3 bilden jeweils eine Teillichtverteilung, die zur Erzeugung einer Gesamtlichtverteilung überlagerbar sind. Da die Lichtflecken L1, L2, L3 aller Fernlichtverteilungen FL1, FL2, FL3 die gleiche Breite b aufweisen, sind die Teillichtverteilungen in der Spalte, das heißt in vertikaler Richtung überlagerbar.

Die Optikeinheiten 2, 3 sind derart ausgebildet, dass die Lichtverteilungen FL2, FL3 bzw. Lichtflecken L2, L3 sich von einer gemeinsamen Bezugshorizontalen 8 in vertikaler Richtung nach oben erstrecken.

Die Lichtflecken L1, L2, L3 der jeweiligen Teillichtverteilungen FL1, FL2, FL3 erstrecken sich jeweils in einer einzigen horizontal verlaufenden Zeile. Die Anzahl der Lichtflecken L1, L2, L3 der jeweiligen Fernlichtverteilung FL1 bzw. FL2 bzw. FL3 sind gleich, im vorliegenden Ausführungsbeispiel beträgt die Anzahl acht. Insofern weisen auch die Fernlichtverteilungen FL1, FL2, FL3 eine gleiche Gesamtbreite I auf (Erstreckung in horizontaler Richtung).

Zur Erzeugung einer Fernlichtfunktion können die LED-Lichtquellen mittels der Ansteuereinheit 7 derart angesteuert werden, dass die erste Fernlichtverteilung FL1 und/oder die zweite Fernlichtverteilung FL2 und/oder die dritte Fernlichtverteilung FL3 erzeugt wird. Dadurch, dass die LED-Lichtquellen einzeln ansteuerbar sind, kann eine dynamische Entblendung eines im Fahrzeugvorfeld befindlichen Objektes verwirklicht werden.

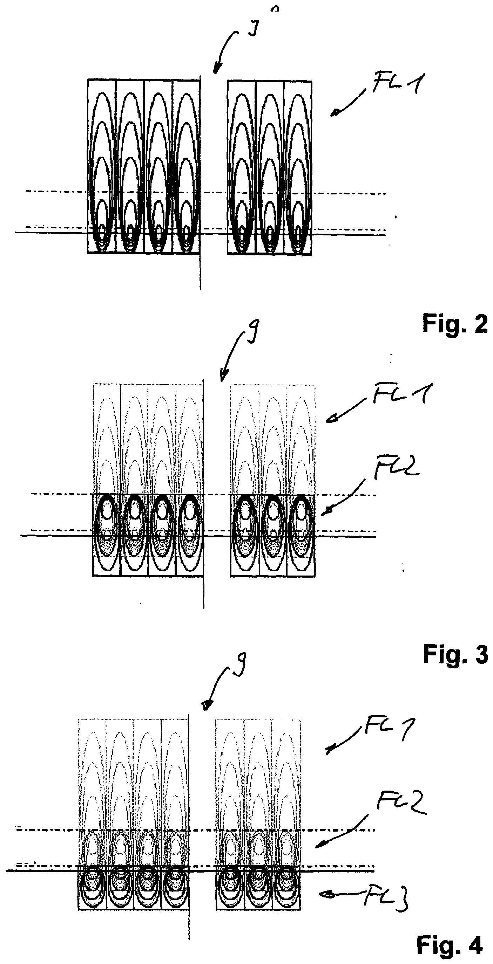

Nach einer ersten Ausführungsform gemäß Figur 2 wird lediglich die der ersten Optikeinheit 1 zugeordnete Gruppe 4 von LED-Lichtquellen angesteuert, wobei in Abhängigkeit von der Ortsbestimmung des Verkehrsobjektes im Fahrzeugvorfeld eine LED-Lichtquelle der Gruppe 4 von LED-Lichtquellen ausgeschaltet wird, und zwar diese, die im eingeschalteten Zustand mittels der ersten Optikeinheit 1 zu dem Lichtflecken L1 abgebildet würde, in dem sich das Verkehrsobjekt aktuell befindet. Es wird somit eine Entblendungsspalte 9 realisiert.

Nach einer alternativen Ausführungsform der Erfindung gemäß Figur 3 wird diese Entblendungsspalte 9 auch dann realisiert, wenn die der ersten Optikeinheit 1 und der zweiten Optikeinheit 2 zugeordnete Gruppe 4, 5 von LED-Lichtquellen angesteuert wird. In Übereinstimmung zu der Variante gemäß Figur 2 wird nicht nur die das Verkehrsobjekt ansonsten beleuchtende LED-Lichtquelle der ersten Gruppe 4, sondern auch der zweiten Gruppe 5 ausgeschaltet.

Gemäß einer Ausführungsform nach Figur 4 kann die Entblendungsspalte 9 auch realisiert werden, wenn die an den drei Optikeinheiten 1, 2, 3 zugeordneten LED-Lichtquellen eingeschaltet werden mit Ausnahme derjenigen, mittels derer das Verkehrsobjekt beleuchtet würde.

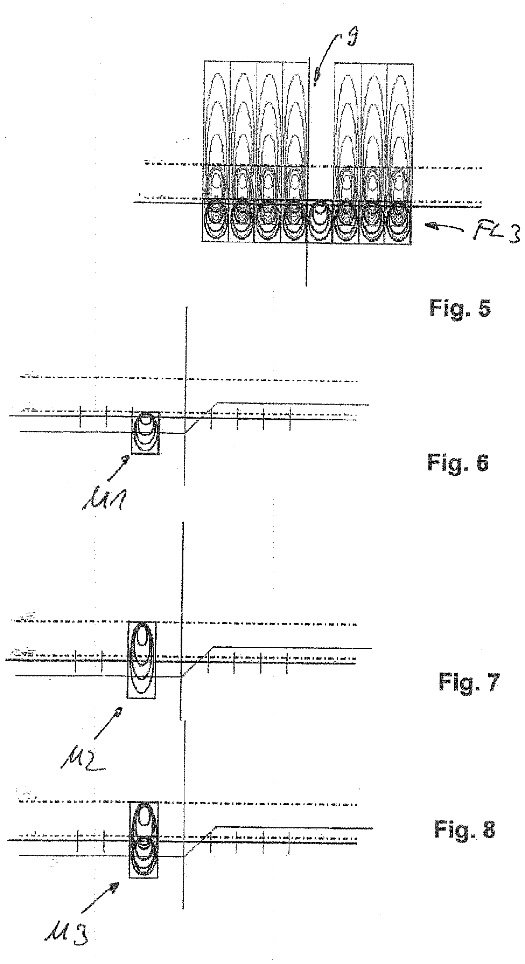

Nach einer weiteren Ausführungsform der Erfindung gemäß Figur 5 kann im Unterschied zur Ausführungsform nach Figur 4 die dynamische Fernlichtfunktion mit integrierter Entblendungsbildung auch so ausgeführt sein, dass grundsätzlich alle LED-Lichtquellen der dritten Fernlichtverteilung FL3 eingeschaltet bleiben. Hierdurch erfolgt eine Anhebung der Entblendungsspalte 9 in vertikaler Richtung nach oben hin.

Nach einer weiteren Ausführungsform gemäß den Figuren 6, 7 und 8 kann die segmentierte Spaltenansteuerung der Fernlichtverteilungen FL1, FL2, FL3 auch dazu genutzt werden, ein Markierungslicht zusätzlich zu einem vorhandenen Abblendlicht zu erzeugen. Gemäß Figur 6 wird lediglich eine einzige LED-Lichtquelle der der dritten Optikeinheit 3 zugeordneten Leiste 6 von LED-Lichtquellen eingeschaltet zur Bildung eines Markierungsfleckens M1. Gemäß Figur 7 wird lediglich eine einzige LED-Lichtquelle der der zweiten Optikeinheit 2 zugeordneten Leiste 4 von LED-Lichtquellen eingeschaltet zur Bildung eines Markierungsfleckens M2. Die Markierungslichtflecken M1 und M2 werden gemäß Figur 8 zu einem Markierungslichtfleck M3 überlagert, wobei entsprechende LED-Lichtquellen der zweiten und dritten Gruppe 5, 6 eingeschaltet sind.

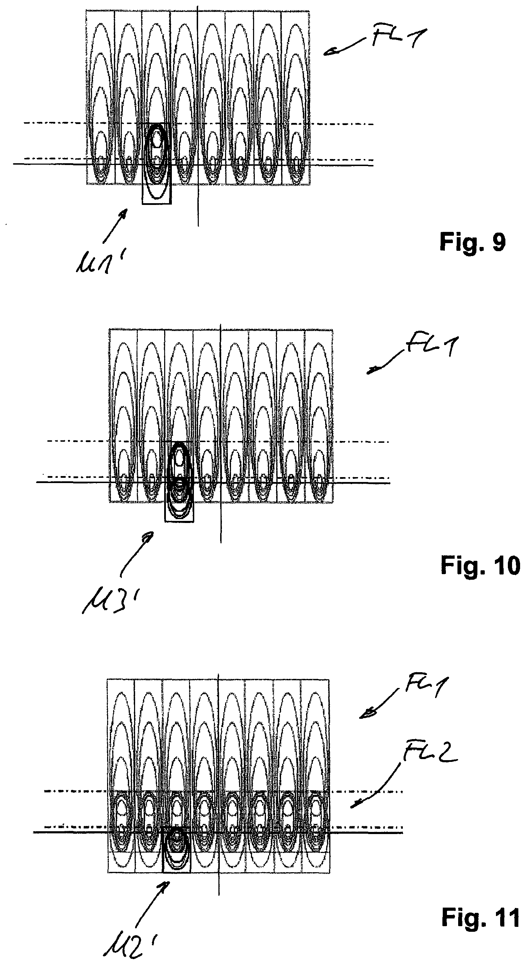

Gemäß Ausführungsbeispielen nach den Figuren 9 bis 11 kann eine Markierungslichtfunktion zusätzlich zu einer Fernlichtfunktion realisiert werden.

Gemäß Figur 9 wird das Fernlicht durch eingeschaltete LED-Lichtquellen der ersten Gruppe 4 zur Erzeugung der Fernlichtverteilung FL1 bereitgestellt. Zur Erzeugung des Markierungslichtes wird eine LED-Lichtquelle der der zweiten Optikeinheit 2 zugeordneten Gruppe 5 von LED-Lichtquellen eingeschaltet zur Erzeugung des Markierungsfleckens M1'.

Nach einer weiteren alternativen Ausführungsform gemäß Figur 11 kann die Fernlichtfunktion auch durch vollständige Ansteuerung der Gruppen 4 und 5 von LED-Lichtquellen erzeugt werden. Das Markierungslicht wird durch zusätzliche Einschaltung einer der Gruppen 6 von LED-Lichtquellen bewirkt zur Erzeugung eines Markierungslichtfleckens M2'.

Gemäß einer alternativen Ausführungsform nach der Figur 10 kann das Markierungslicht auch erzeugt werden durch Überlagerung des Markierungslichtfleckens M1' und des Markierungslichtfleckens M2' zu einem resultierenden Markierungslicht M3'. Die Fernlichtfunktion wird hierbei - wie gemäß der Ausführungsform nach Figur 9 - durch vollständige Ansteuerung der Gruppe 4 von LED-Lichtquellen erzeugt.

Nach einer nicht dargestellten alternativen Ausführungsform können die Gruppen von LED-Lichtquellen auch durch mehrere Zeilen von LED-Lichtquellen gebildet sein.

### Bezugszeichenliste

- 1: Optikeinheit
- 2: Optikeinheit
- 3: Optikeinheit
- 4: Gruppe von LED-Lichtquellen
- 5: Gruppe von LED-Lichtquellen
- 6: Gruppe von LED-Lichtquellen
- 7: Ansteuereinheit
- 8: Bezugshorizontale
- 9: Entblendungsspalte
- b: Breite
- FL1, FL2, FL3: Fernlichtverteilung
- h1, h2, h3: Höhe
- HDG1, HDG2,: Hell-Dunkel-Grenze
- I: Gesamtbreite
- L1, L2, L3: Lichtflecken
- M1, M2, M3; M1', M2', M3': Markierungslichtflecken

## Patentansprüche

1. Scheinwerfer für Fahrzeuge mit mehreren Gruppen (4, 5, 6) von LED-Lichtquellen, wobei die LED-Lichtquellen jeweils zu Lichtflecken (L1, L2, L3) abgebildet sind und wobei sich die Gruppen (4, 5, 6) der LED-Lichtquellen jeweils zeilenförmig in horizontaler Richtung erstrecken, und mit mehreren Optikeinheiten (1, 2, 3) unterschiedlicher Abbildungscharakteristik, denen jeweils eine Zeile von Lichtquellen zugeordnet ist, so dass durch eine erste Optikeinheit abgebildete erste Lichtflecken (L1) eine unterschiedliche Größe zu durch eine zweite Optikeinheit (2) abgebildete zweite Lichtflecken (L2) aufweisen, wobei durch die ersten Lichtflecken (L1) eine erste Teillichtverteilung (FL1) und durch die zweiten Lichtflecken (L2) eine zweite Teillichtverteilung (FL2) gebildet ist, und dass die Gruppen (4, 5, 6) von LED-Lichtquellen derart ansteuerbar sind, dass eine vorgegebene Gesamtlichtverteilung durch Überlagerung der Teillichtverteilungen (FL1, FL2, FL3) gebildet ist, dass die Optikeinheiten (1, 2, 3) derart ausgebildet sind, dass alle Lichtflecken (L1, L2, L3) eine gleiche Breite (b) aufweisen und dass die von den verschiedenen Optikeinheiten (1, 2, 3) abgebildeten Lichtflecken (L1, L2, L3) eine unterschiedliche Höhe (h1, h2, h3) aufweisen, **dadurch gekennzeichnet,**
- **dass** die erste Optikeinheit (1) eine solche Abbildungscharakteristik aufweist, dass die abgebildeten ersten Lichtflecken (L1) eine gleiche Höhe (h1) aufweisen zur Bildung einer Fernlicht-Grundverteilung (FL1),
- **dass** die zweite Optikeinheit (2) eine solche Abbildungscharakteristik aufweist, dass die abgebildeten zweiten Lichtflecken (L2) eine Höhe (h2) aufweisen zur Bildung einer oberen Hell-/Dunkelgrenze (HDG1) einer Fernlichtverteilung (FL2), wobei die Höhe (h2) der zweiten Lichtftecken (L2) kleiner ist als die Höhe (h1) der ersten Lichtflecken (L1), und wobei die obere Hell-Dunkelgrenze (HDG1) von einer oberen Kante der zweiten Lichtflecken (L2) gebildet ist,
- **dass** die dritte Optikeinheit (3) eine solche Abbildungscharakteristik aufweist, dass die abgebildeten dritten Lichtflecken (L3) eine Höhe (h3) aufweisen zur Bildung einer unteren Hell-/Dunkelgrenze (HDG2) einer Fernlichtverteilung (FL2), die unterhalb der oberen Hell-/Dunkelgrenze (HDG1) angeordnet ist, wobei die Höhe (h3) der dritten Lichtflecken (L3) kleiner ist als die Höhe (h1, h2) der anderen Lichtflecken (L1, L2), wobei die untere Hell-Dunkelgrenze (HDG2) von einer oberen Kante der dritten Lichtflecken (L3) gebildet ist,
- **dass** die Fernlichtverteilungen (FL1, FL2, FL3) zu der Gesamtlichtverteilung überlagerbar sind, wobei die obere Hell-Dunkelgrenze (HDG2) in der vertikalen Richtung über der unteren Hell-Dunkelgrenze (HDG1) liegt.

2. Scheinwerfer nach Anspruch 1, **dadurch gekennzeichnet, dass** die von derselben Optikeinheit (1, 2, 3) abgebildeten Lichtflecken (L1, L2, L3) jeweils die gleiche Höhe (h1, h2, h3) aufweisen.

3. Scheinwerfer nach Anspruch 1 oder 2, **dadurch gekennzeichnet, dass** die jeweils von den Optikeinheiten (1, 2, 3) abgebildeten Lichtftecken (L1, L2, L3) sich in einer einzigen Zeile in horizontaler Richtung erstrecken.

4. Scheinwerfer nach einem der Ansprüche 1 bis 3, **dadurch gekennzeichnet, dass** die Abbildungscharakteristik der Optikeinheiten (1, 2, 3) derart ausgebildet ist, dass die abgebildete Zeile von Lichtflecken (L1, L2, L3) in horizontaler Richtung die gleiche Erstreckung (I) aufweisen.

5. Scheinwerfer nach einem der Ansprüche 1 bis 4, **dadurch gekennzeichnet, dass** die LED-Lichtquellen dimmbar ausgebildet sind.

6. Scheinwerfer nach einem der Ansprüche 1 bis 5, **dadurch gekennzeichnet, dass** eine Ansteuereinheit (7) vorgesehen ist, so dass in Abhängigkeit von einer Ortsbestimmung eines Objekts im Fahrzeugvorfeld solche LED-Lichtquellen ausschaltbar sind, die von den verschiedenen Optikeinheiten (1, 2, 3) zu einer Entblendungsspalte (9) von Lichtflecken (L1, L2, L3) in vertikaler Richtung abgebildet werden, in der sich das Objekt befindet.

7. Scheinwerfer nach einem der Ansprüche 1 bis 6, **dadurch gekennzeichnet, dass** die Ansteuereinheit (7) vorgesehen ist, derart, dass in Abhängigkeit von einer Ortsbestimmung eines Objekts im Fahrzeugvorfeld solche LED-Lichtquellen ausschaltbar sind, die von den verschiedenen Optikeinheiten (1, 2, 3) zu einer Entblendungsspalte (9) von Lichtflecken (L1, L2, L3) in vertikaler Richtung abgebildet werden, in der sich das Objekt befindet, wobei eine den untersten Lichtfleck (L3) in dieser so gebildeten Entblendungsspalte (9) erzeugter Lichtfleck nicht ausschaltbar ist.

8. Scheinwerfer nach einem der Ansprüche 1 bis 7, **dadurch gekennzeichnet, dass** die Ansteuereinheit (7) vorgesehen ist, derart, dass in Abhängigkeit von einer Ortsbestimmung eines Objektes im Fahrzeugvorfeld solche LED-Lichtquellen einschaltbar sind, die zusätzlich zu einer Abblendlichtverteilung oder zusätzlich zu einer Fernlicht-Grundverteilung von mindestens einer Optikeinheit (1, 2, 3) in einer in vertikaler Richtung verlaufenden Spalte zu Lichtftecken (M1, M2, M3) abgebildet werden, in der sich das Objekt befindet.

## Claims

1. Headlamp for vehicles with several groups (4, 5, 6) of LED light sources, where the LED light sources in each case are formed into light patches (L1, L2, L3) and where the groups (4, 5, 6) of the LED light sources extend in each case in the form of rows in a horizontal direction and with several optical units (1, 2, 3) with different imaging characteristics, to which optical units a row of light sources is allocated in each case in such a way that the first light patches (L1) formed by a first optical unit are of a different size to light patches (L2) formed by a second optical unit (2), where a first partial light distribution (FL 1) is formed by the first light patches (L1) and a second partial light distribution (FL 2) is formed by the second light patch (L2) and such that the groups (4, 5, 6) of LED light sources can be actuated in such a way that a specified overall light distribution is formed by overlapping of the partial light distributions (FL1, FL2, FL3), so that the optical units (1, 2, 3) are formed in such a way that all light patches (L1, L2, L3) are of the same width (b) and that the light patches (L1, L2, L3) formed by the various optical units (1, 2, 3) are of different heights (h1, h2, h3), **characterized in that**
- the first optical unit (1) features such imaging characteristics that the first light patches (L1) formed feature the same height (h1) for the creation of a basic high-beam distribution (FL1)
- the second optical unit (2) features such imaging characteristics that the second light patches (L2) formed feature a height (h2) for the creation of an upper light-dark cut-off line (HDG1) of a high-beam distribution (FL2), where the height (h2) of the second light patches (L2) is smaller than the height (h1) of the first light patch (L1), and where the upper light-dark cut-off line (HDG1) is formed by an upper edge of the second light patch (L2),
- the third optical unit (3) features such imaging characteristics that the third light patches (L3) formed feature a height (h3) for the creation of a lower light-dark cut-off line (HDG2) of a high-beam distribution (FL2), that is arranged below the upper light-dark cut-off line (HDG1), where the height (h3) of the third light patches (L3) is smaller than the height (h1, h2) of the other light patches (L1, L2), where the lower light-dark cut-off line (HDG2) is formed by the upper edge of the third light patch (L3),
- the high-beam distributions (FL1, FL2, FL3) to the overall light distribution can be overlapped, where the upper light-dark cut-off line (HDG2) is above the lower light-dark cut-off line (HDG1) in a vertical direction.

2. Headlamp in accordance with Claim 1, **characterized in that** the light patches (L1, L2, L3) formed by the same optical unit (1, 2, 3) each feature the same height (h1, h2, h3).

3. Headlamp in accordance with Claim 1 or 2, **characterized in that** the respective light patches (L1, L2, L3) formed by the optical units (1, 2, 3) extend on one single row in a horizontal direction.

4. Headlamp in accordance with one of Claims 1 through 3, **characterized in that** the imaging characteristics of the optical units (1, 2, 3) are formed in such a way that the row of light patches (L1, L2, L3) formed feature the same extension (1) in a horizontal direction.

5. Headlamp in accordance with one of Claims 1 through 4, **characterized in that** the LED light sources are formed so as to be dimmable.

6. Headlamp in accordance with one of Claims 1 through 5, **characterized in that** a control unit (7) is provided for so that depending on localization of an object in the area ahead of the vehicle, those LED light sources can be switched off that are formed by the various optical units (1, 2, 3) to a glare suppression column (9) of light patches (L1, L2, L3) in a vertical direction in which the object is located.

7. Headlamp in accordance with one of Claims 1 through 6, **characterized in that** the control unit (7) is provided for so that, depending on localization of an object in the area ahead of the vehicle, those LED light source can be switched off that are formed by the various optical units (1, 2, 3) into a glare suppression column (9) of light patches (L1, L2, L3) in a vertical direction in which the object is located, where one light source creating the lowest light patch (L3) in this glare suppression column (9) formed in this way cannot be switched off.

8. Headlamp in accordance with one of Claims 1 through 7, **characterized in that** the control unit (7) is provided for so that, depending on localization of an object in the area ahead of the vehicle, those LED light sources can be switched on that are, in addition to a low-beam light distribution or in addition to a basic high-beam distribution, formed by at least one optical unit (1, 2, 3) into light patches (M1, M2, M3) in a column running vertically in which the object is located.

## Revendications

1. Phare pour véhicules avec plusieurs groupes (4, 5, 6) de sources lumineuses LED, les sources lumineuses LED étant représentées comme points lumineux (L1, L2, L3) et les groupes (4, 5, 6) de sources lumineuses LED s'étendant chacun de manière linéaire dans le sens horizontal, et avec plusieurs unités optiques (1, 2, 3) de différentes caractéristiques de représentation, à chacune desquelles une ligne de sources lumineuses est affectée, *de manière à ce que les premiers points lumineux (L1) constitués par* une première unité optique soient d'une taille différente que les points lumineux (L2) constitués par une seconde unité optique, les premiers points lumineux (L1) représentant une première répartition partielle de l'éclairage (FL 1) et les seconds points lumineux (L2) représentant une seconde répartition partielle de l'éclairage (FL2), et à ce que les groupes (4, 5, 6) de sources lumineuses LED puissent être commandés de sorte qu'une répartition totale prédéfinie de l'éclairage soit représentée par superposition des répartitions partielles de l'éclairage (FL1, FL2, FL3), que les unités optiques soient représentées de sorte que tous les points lumineux (L1, L2, L3) présentent une largeur identique (b) et à ce que les points lumineux (L1, L2, L3) représentés par les différentes unités optiques (1, 2, 3) aient une hauteur différente (h1, h2, h3), **caractérisé par le fait**
- **que** la première unité optique (1) présente une caractéristique de représentation telle que les premiers points lumineux représentés (L1) aient une hauteur identique (h1) pour réaliser une répartition de base du faisceau de route (FL1),
- **que** la seconde unité optique (2) présente une caractéristique de représentation telle que les seconds points lumineux représentés (L2) aient une hauteur (h2) pour réaliser une ligne de coupure supérieure (HDG1) pour la répartition du faisceau de route (FL2), la hauteur (h2) des seconds points lumineux (L2) étant inférieure à la hauteur (h1) des premiers points lumineux (L1), et la ligne de coupure supérieure (HDG1) étant représentée par rapport à un bord supérieur des seconds points lumineux (L2),
- **que** la troisième unité optique (3) présente une caractéristique de représentation telle que les troisièmes points lumineux représentés (L3) aient une hauteur (h3) pour réaliser une ligne de coupure inférieure (HDG2) pour la répartition du faisceau de route (FL2) située en dessous de la ligne de coupure supérieure (HDG1), la hauteur (h3) des troisièmes points lumineux (L3) étant inférieure à la hauteur (h1, h2) des autres points lumineux (L1, L2), et la ligne de coupure inférieure (HDG2) étant représentée par rapport à un bord supérieur des troisièmes points lumineux (L3),
- **que** les répartitions du faisceau de route (FL1, FL2, FL3) puissent être superposées à la répartition totale de l'éclairage, la ligne de coupure supérieure (HDG2) se trouvant au-dessus de la ligne de coupure intérieure (HDG1) dans le sens vertical.

2. Phare selon la revendication 1, **caractérisé par le fait que** les points lumineux (L1, L2, L3) représentés par la même unité optique (1, 2, 3) ont chacun la même hauteur (h1, h2, h3).

3. Phare selon la revendication 1 ou 2, **caractérisé par le fait que** les points lumineux (L1, L2, L3) représentés chacun par les unités optiques (1, 2, 3) s'étendent sur une seule ligne dans le sens horizontal.

4. Phare selon les revendications 1 à 3, **caractérisé par le fait que** la caractéristique de représentation des unités optiques (1, 2, 3) est telle que la ligne constituée par les points lumineux (L1, L2, L3) s'étende de manière identique (1) dans le sens horizontal.

5. Phare selon les revendications 1 à 4, **caractérisé par le fait que** les sources lumineuses LED sont à intensité réglable.

6. Phare selon l'une des revendications 1 à 5, **caractérisé par le fait qu'**une unité de commande (7) est prévue pour qu'il soit possible en fonction de la localisation d'un objet se trouvant devant le véhicule de désactiver des sources lumineuses LED qui sont représentées par les différentes unités optiques (1, 2, 3) en une fente anti-éblouissement (9) de points lumineux (L1, L2, L3) dans le sens vertical, dans laquelle se trouve l'objet.

7. Phare selon l'une des revendications 1 à 6, **caractérisé par le fait que** l'unité de commande (7) est prévue de sorte qu'il soit possible en fonction de la localisation d'un objet se trouvant devant le véhicule de désactiver des sources lumineuses LED qui sont représentées par les différentes unités optiques (1, 2, 3) en une fente anti-éblouissement (9) de points lumineux (L1, L2, L3) dans le sens vertical, dans laquelle se trouve l'objet, l'un des points lumineux inférieurs (L3) situés dans cette fente anti-éblouissement (9) n'étant pas désactivable.

8. Phare selon l'une des revendications 1 à 7, **caractérisé par le fait qu'**une unité de commande (7) est prévue pour qu'il soit possible en fonction de la localisation d'un objet se trouvant devant le véhicule d'activer des sources lumineuses LED, en plus d'une répartition du faisceau de croisement ou en plus d'une répartition de base du faisceau de route, qui sont représentées par au moins une unité optique (1, 2, 3) en une fente de points lumineux (M1, M2, M3) dans le sens vertical, dans laquelle se trouve l'objet.
